# EUROPÄISCHE PATENTSCHRIFT

(11) **EP 1 816 827 B1**
(45) Veröffentlichungstag und Bekanntmachung des Hinweises auf die Patenterteilung: **15.04.2015**
(21) Anmeldenummer: 06002487.4
(22) Anmeldetag: 07.02.2006
(51) Int. Cl.: H04L 29/08, H04M 11/02, H04L 12/28

(54) **Aktor-Sensoreinrichtung zur Kommunikation über ein paketorientiertes Netzwerk**
Actuator-Sensor for communication over a packet-oriented network
Actionneur-capteur pour la communication sur un un réseau oriente paquets.

(43) Veröffentlichungstag der Anmeldung: 08.08.2007
(73) Patentinhaber: Unify GmbH & Co. KG, 81379 München (DE)
(72) Erfinder: Brasse, Oliver, 58452 Witten (DE); Schwartze, Jürgen, 58239 Schwerte (DE)
(74) Vertreter: Fritzsche, Thomas

(56) Entgegenhaltungen:
- EP-A- 0 557 778
- DE-U1- 20 104 202
- DE-U1-202004 015 612
- US-A1- 2005 190 076

## Beschreibung

Die vorliegende Erfindung betrifft eine Aktor-Sensoreinrichtung mit Mitteln zur Kommunikation über ein paketorientiertes Netzwerk, insbesondere Peer-to-Peer-Netz.

Im Stand der Technik sind ortsgebundene Signalgeber und Signalempfänger bzw. Aktor-Sensoreinrichtungen bekannt. Zu den genannten Einrichtungen zählen beispielsweise Temperaturmelder, Rauchmelder, Garagentoröffner, Rollladensteuerungen usw. Die Aktor-Sensoreinrichtungen weisen dabei Aktoren, Sensoren oder auch eine Kombination der beiden auf.

Bislang eingesetzte Aktor-Sensoreinrichtungen der genannten Art verfügen üblicherweise über eine Punkt-zu-Punkt-Verbindung zur Übergabe von Sensordaten an eine zentrale Steuerung bzw. zum Empfang von Steuerdaten von der zentralen Steuerung für eine Ansteuerung der Aktoren.

Aus der europäischen Patentschrift EP 0 557 778 B1 ist beispielsweise ein als Türfreisprechstelle ausgebildetes Endgerät zum Anschluss an ein Telekommunikationssystem bekannt.

Die genannte Punkt-zu-Punkt-Verbindung an eine zentrale Stelle, wie z.B. an ein Telekommunikationssystem, weist mehrere Nachteile auf. Zum einen bedingt eine Punkt-zu-Punktförmige Verbindung mehrerer solcher Aktor-Sensoreinrichtungen eine sternförmige Anschlussweise an eine zentrale Einrichtung, welche auf Seiten der zentralen Einrichtung einen erhöhten Datendurchsatz zur Folge hat, da dieser eine zentrale Verarbeitung sämtlicher ausgetauschter Daten vorbehalten ist. Zum anderen wirkt sich eine funktionsnotwendige zentrale Steuerung negativ auf die Ausfallsicherheit eines solchen vernetzten Systems mehrerer Aktor-Sensoreinrichtungen aus.

Aufgabe der Erfindung ist es daher, Mittel anzugeben, bei deren Einsatz die genannten Probleme bei einer Anschaltung und Steuerung von Aktor-Sensoreinrichtungen vermieden werden.

Eine Lösung der Aufgabe erfolgt durch eine Vorrichtung mit den Merkmalen des Patentanspruchs 1.

Die erfindungsgemäße Vorrichtung sieht eine Aktor-Sensoreinrichtungen mit Mitteln zur Kommunikation über ein paketorientiertes Netzwerk vor. Die Aktor-Sensoreinrichtung verfügt dabei über mindestens einen abrufbaren und/oder änderbaren Betriebszustand. Ein abrufbarer Betriebszustand ist dabei beispielsweise eine gemeldete Temperatur, ein übertragenes Sprachsignal oder ein Ergebnis einer chemischen Analyse der Umgebungsluft. Unter einem änderbaren Betriebszustand wird beispielsweise die Lage eines Rollladens verstanden, welche über ein Steuerkommando mittels eines Antriebsmotors veränderbar ist. Die Aktor-Sensoreinrichtung weist Mittel zur Anbindung an ein Ressourcenverwaltungssystem, in der Fachwelt auch mit Resource Management Framework bezeichnet, auf. Ein solches Ressourcen-Verwaltungssystem gewährleistet einen Betrieb der Aktor-Sensoreinrichtung in ein Peer-to-Peer-System, bei der die Aktor-Sensoreinrichtung als Peer agiert. Über das Ressourcenverwaltungssystem ist ein Peer in der Lage, beliebige Informationen in strukturierter Form als Ressource im Netz zu publizieren und allen anderen Peers (beispielsweise weitere Aktor-Sensoreinrichtungen, steuernde Rechnersysteme oder Kommunikationsendgeräte) zur Verfügung zu stellen. Für die erfindungsgemäße Aktor-Sensoreinrichtung ist dabei mindestens ein Betriebszustand in strukturierter Form über das Ressourcenverwaltungssystem abrufbar und/oder änderbar.

Als besonderer Vorteil der Erfindung ist zu nennen, dass mit Einsatz der erfindungsgemäß vorgeschlagenen Mittel eine Ausfallsicherheit im Falle eines Ausfalls der zentralen Steuerung erhöht wird, da durch die dezentrale Verwaltung auch andere Aktor-Sensoreinrichtungen Steueraufgaben komplett oder teilweise übernehmen können.

Ein weiterer Vorteil der erfindungsgemäßen Mittel besteht darin, dass ein Anschluss der Aktor-Sensoreinrichtungen über eine Netzwerkschnittstelle erfolgt, welche in zunehmenden Maße in einer Haus- oder Büroinstallation Verbreitung findet. Damit entfällt in vorteilhafter Weise eine separate Verkabelung zwischen den einzelnen Aktor-Sensoreinrichtungen untereinander sowie zwischen einer Aktor-Sensoreinrichtung und einer zentralen Steuerung. Mit einem Einsatz eines drahtlosen Netzwerks entfällt in vorteilhafter Weise jegliche Verkabelung der Aktor-Sensonreinrichtungen.

Weitere Ausgestaltungen der Erfindung sind Gegenstand der Unteransprüche.

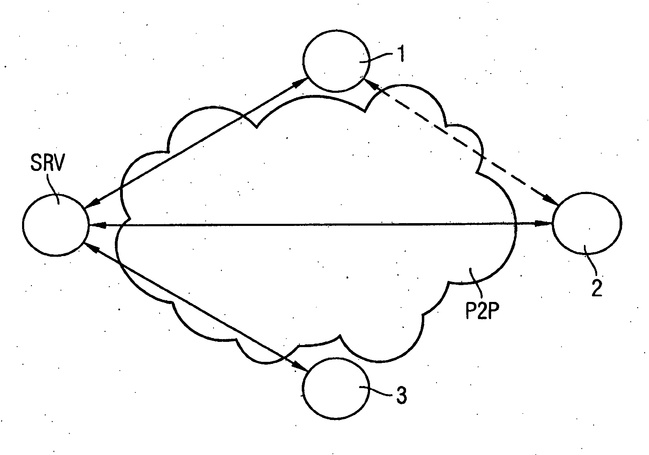

Ein Ausführungsbeispiel mit weiteren Vorteilen und Ausgestaltungen der Erfindung wird im Folgenden anhand der Zeichnung näher erläutert.

Dabei zeigt die einzige Figur ein Strukturbild zur schematischen Darstellung eine Mehrzahl von Aktor-Sensoreinrichtungen, welche über ein paketorientiertes Netzwerk miteinander verbunden sind.

Die FIG zeigt ein paketorientiertes Netzwerk P2P, an welches eine zentrale Einheit bzw. Server SRV sowie eine Mehrzahl von Aktor-Sensoreinrichtungen 1,2,3 als Peer 1,2,3 angeschlossen sind.

Eine Kommunikation über das paketorientierte Netzwerk P2P erfolgt nach den Prinzipien eines dezentralen Netzwerks. Bei einem solchen dezentralen Netzwerk bzw. Peer-to-Peer-Netzwerk bietet ein überwiegender Anteil von verbundenen Netzelementen - z.B. die Aktor-Sensoreinrichtungen 1,2,3 sowie weitere, nicht dargestellten Netzelemente - anderen Netzelementen Funktionen und Dienstleistungen an und nutzt andererseits von anderen Netzelementen angebotene Funktionen und Dienstleistungen, ohne dass hierzu eine zentrale Instanz für eine Steuerung einer Kommunikationsbeziehung vorgesehen sein muss. Der dargestellte Server SRV ist demgemäß nicht notwendigerweise eine steuernde Instanz zur Steuerung von Kommunikationsbeziehungen, kann jedoch, wie andere Peers 1,2,3, zugewiesene Steueraufgaben ausüben. Statt einer alleinigen Steuerung durch den Server SRV kann eine kollaborative Steuerung durch mehrere Aktor-Sensoreinrichtungen 1,2,3 sowie weitere - nicht dargestellte - Netzelemente vorgesehen sein.

Neben einen mit durchgezogenen Pfeilen symbolisierten bidirektionalen Kommunikation der jeweiligen Aktor-Sensoreinrichtung 1,2,3 mit dem Server SRV ist exemplarisch eine dezentrale Kommunikation einer ersten Aktor-Sensoreinrichtungen 1 mit einer zweiten Aktor-Sensoreinrichtungen 2 durch eine strichlierte Linie dargestellt. In einem solchen Fall kann auch der nunmehr als Peer agierende Server SRV als »Relaisstation« zwischen den von der ersten Aktor-Sensoreinrichtung 1 und der zweiten Aktor-Sensoreinrichtungen 2 ausgetauschten Nachrichten vorgesehen sein. Ein solcher Betrieb als Relaisstation bedeutet beispielsweise, dass der Server SRV zwischen der ersten Aktor-Sensoreinrichtung 1 und der zweiten Aktor-Sensoreinrichtungen 2 ausgetauschte Nachrichten »mithört«, also mit einer eventuellen Auswertung des Inhalts der ausgetauschten Nachrichten transparent weiterreicht.

Im vorbeschriebenen dezentralen Netzwerk P2P nimmt ein Netzelement gegenüber einem anderen Netzelement fallweise eine Rolle als Server bzw. als Client ein. Ein solches Netzelement wird daher in Abgrenzung von einer üblichen Client-Server-Architektur oftmals auch als Peer bezeichnet. Im Gegensatz zur vorgenannten Client-Server-Architektur bedeutet der Begriff »Client« im Kontext eines Peer-to-Peer-Netzwerks eine Software, die einen Peer zur Teilnahme an einem Peer-to-Peer-Netzwerk befähigt.

Eine Begriffsabgrenzung dieses dezentralen Netzwerks schließt im Übrigen das Vorhandensein zentraler Instanzen wie dem dargestellten Server SRV nicht generell aus. Auch auf Mischformen von Netzwerken, bei denen bestimmte Aufgaben auf eine zentrale Instanz, z.B. den Server SRV verlagert sind, wird mit der Bezeichnung dezentrales Netzwerk bzw. Peer-to-Peer-Netzwerk Bezug genommen, soweit in diesen Netzwerken kein Server vorgehalten ist, über den jegliche Kommunikationsbeziehung zwischen zwei Netzelementen zu führen ist.

Die Aktor-Sensoreinrichtungen 1,2,3 verfügen neben einem oder mehrere Sensoren und/oder einem oder mehreren Aktoren über Mittel zum Anschluss an ein paketorientiertes Netzwerk, beispielsweise gemäß IEEE (Institute of Electrical and Electronics Engineers) Standard 802.3. Ein Anschluss der Aktor-Sensoreinrichtungen 1,2,3 sowie des Servers SRV kann in beliebiger Weise, z.B. drahtgebunden oder auch drahtlos erfolgen. Eine drahtloser Anschluss erfolgt beispielsweise unter Anwendung der WLAN-Spezifikationen (Wireless Local Area Network) gemäß IEEE Standard 802.11.

Entsprechend einer benötigten Rechenleistung bei Berücksichtigung der äußeren Abmessungen enthalten die Aktor-Sensoreinrichtungen 1,2,3 bedarfsweise einen Mikrocontroller mit einem implementierten TCP/IP-Stack (Transmission Control Protocol/Internet Protocol), weitere Software zur Implementierung einer Kommunikation mit einem - nicht dargestellten - Ressourcenverwaltungssystem sowie die oben genannte Client-Software zur Realisierung der Peer-Funktion.

Ein Bestandteil des erwähnten Ressourcenverwaltungssystem ist beispielsweise ein »Lookup«-Dienst in Peer-to-Peer-Netzwerken, welche eine dezentrale Ablage und Auffindung von Daten gewährleistet. Ein solcher Dienst wird beispielsweise unter Verwendung des Protokolls »Chord« des Massachusetts Institute of Technology implementiert.

Die dargestellten Aktor-Sensoreinrichtungen 1,2,3 sind erfindungsgemäß als Peers im dezentralen Netzwerk P2P eingebunden. Dies bedeutet, dass dem »physikalischen« paketorientierten Netzwerk P2P ein logisches »Overlay-Netz« überlagert ist, welches ein Ressourcenverwaltungssystem zur Verwirklichung einer Peer-to-Peer-Architektur realisiert. Insbesondere ermöglicht ein derartiges Ressourcenverwaltungssystem - in der Fachwelt auch Resource Framework genannt - jedem Peer 1,2,3, beliebige Informationen in strukturierter Form als Ressource im Netzwerk P2P zu publizieren und somit allen anderen Peers 1,2,3 oder auch bestimmten Klassen von Peers zur Verfügung zu stellen.

Die erfindungsgemäßen Mittel sehen vor, dass die Aktor-Sensoreinrichtungen 1,2,3 in das paketorientierte Netzwerk P2P eingebunden werden und ihre besonderen Eigenschaften über das Ressourcenverwaltungssystem bekannt machen. Neben einer Bekanntmachung ihrer Eigenschaften ist auch eine Bekanntmachung ihrer Fähigkeiten vorgesehen. Alle anderen Peers 1,2,3 im paketorientierten Netzwerk P2P sind in der Lage, auf die vorgenannten Fähigkeiten und Eigenschaften zuzugreifen und diese, soweit keine Einschränkung von Berechtigungen vorgesehen ist, zu nutzen.

Eine Publikation bzw. Bekanntmachung von Fähigkeiten und Eigenschaften eines jeweiligen Peers bzw. Aktor-Sensoreinrichtung 1,2,3 erfolgt über eine allgemein definierte, gerätsunabhängige Ressource, in welcher beispielsweise die Identifikation der Aktor-Sensoreinrichtung 1,2,3, eine technische Ausprägung der Aktor-Sensoreinrichtung 1,2,3, sowie verfügbare Steuerungsmöglichkeiten und Zustände enthalten sind.

Mit einem solchen Ansatz gemäß der erfindungsgemäßen Mittel lassen sich auch veränderte oder völlig neue Aktor-Sensoreinrichtungen im paketorientiertem Netzwerk P2P einbringen, ohne das sich durch eine Softwareimplementierung zu berücksichtigende, interne Abläufe bei den übrigen Aktor-Sensoreinrichtungen 1,2,3 oder im Server SRV ändern.

Wird eine bestehende mit einem Aktor ausgestaltete Aktor-Sensoreinrichtung beispielsweise so modifiziert, dass diese nunmehr vier Aktoren aufweist, ist keine Veränderung in der geräteinternen Softwareimplementierung oder im netzweiten Ressourcenverwaltungssystem notwendig. Eine derartige Änderung wirkt sich lediglich auf einen Inhalt einer Eigenschaft bzw. »Capability Resource« aus, welche die modifizierte Aktor-Sensoreinrichtung im paketorientiertem Netzwerk publiziert.

Die bereits angesprochene, in der Zeichnung durch eine strichlierte Linie dargestellte dezentrale Kommunikation einer ersten Aktor-Sensoreinrichtungen 1 mit einer zweiten Aktor-Sensoreinrichtungen 2 ist beispielsweise in einer Situation vorteilhaft einsetzbar, in der ein Betriebszustand bzw. Ereignis der ersten Aktor- Sensoreinrichtung 1 von einem Betriebszustand der zweite Aktor-Sensoreinrichtung 2 abhängt. Eine solche Situation liegt beispielsweise dann vor, wenn an der als Rollladensteuerung ausgestalteten ersten Aktor- Sensoreinrichtung 1 aufgrund einer tageszeitabhängigen Automatik ein Schließen des Rollladens ausgelöst werden soll. Bevor der Aktor zum Schließen des Rollladens jedoch gestartet wird, wird eine Rückfrage an die zweite Aktor-Sensoreinrichtung 2 initiiert, welche in der Zeichnung durch den erwähnten strichlierten Doppelpfeil dargestellt ist. Die zweite Aktor-Sensoreinrichtung 2 verfügt beispielsweise über einen Tageslichtsensor, dessen Betriebszustand aufgrund der Rückfrage durch die erste Aktor- Sensoreinrichtung 1 an diese gemeldet wird.

Statt einer solchen Rückfrage und Übermittlung des Betriebszustandes kann in der ersten Aktor-Sensoreinrichtung 1 in vorteilhafter Weise auch ein im folgenden zu erklärendes »Abonnement« auf einen Eintritt von Betriebszuständen der zweiten Aktor-Sensoreinrichtung 2 eingerichtet werden.

Neben der vorgenannten Rückfrage oder der Publikation ist auch ein Abonnement von Informationen über Ressourcen, Fähigkeiten oder Eigenschaften durch Netzelemente, also beispielsweise den Aktor-Sensoreinrichtungen 1,2,3 oder dem Server SRV, möglich. Ein derartiges Abonnement ermöglicht es einem der genannten Netzelemente, bestimmte Informationen über Ereignisse an einer Aktor-Sensoreinrichtung 1,2,3 bei deren tatsächlichen Eintreten zu beziehen, welche von der publizierenden Aktor-Sensoreinrichtung 1,2,3 über das paketorientierte Netzwerk P2P bzw. über das Ressourcenverwaltungssystem bekannt gegeben werden.

Durch eine zahlenmäßig prinzipiell nicht beschränkte Anzahl von Aktor-Sensoreinrichtungen 1,2,3 im paketorientiertem Netzwerk P2P ist die erfindungsgemäß vorgeschlagene Lösung frei skalierbar.

Jede der dargestellten Aktor-Sensoreinrichtungen 1,2,3 kann ihrerseits mehrere - nicht dargestellte - Aktor-Sensoreinrichtungen enthalten.

Eine vorteilhafte Ausgestaltung der Erfindung sieht eine Definition und eine fallweise Einschränkung von Zugriffsrechten für bestimmte oder alle Aktor-Sensoreinrichtungen 1,2,3 vor. Eine solche Einschränkung ist insbesondere dann von Vorteil, wenn eine Nutzung von angebotenen Diensten nur für Aktor-Sensoreinrichtungen mit bestimmten, netzweit einheitlich definierten Berechtigungsklassen vorgesehen ist.

Eine Ausführungsform zur Einschränkung von Zugriffsrechten sieht beispielsweise vor, dass ein Registrieren von Aktor-Sensoreinrichtungen 1,2,3 an eine »Personal Identification Number« bzw. PIN oder einen vergleichbaren Zugangscode gebunden ist.

Eine weitere vorteilhafte Ausgestaltung der Erfindung dient einer Verifizierung eines störungsfreien Betriebs der Aktor-Sensoreinrichtungen 1,2,3 durch eine besondere Verarbeitung ausgetauschter Informationen in einem dezentralen Netzwerk P2P. Ein störungsfreier Betrieb wird neben vielgestaltigen Defekten auch durch einen Ausfall, also einen vollständigen Verlust der Betriebs- und Kommunikationsfähigkeit hervorgerufen. Ein Ausfall eines ersten Peers 1 wird dabei durch eine Warnung bei einem die Dienste des ersten Peers 1 in Anspruch nehmenden zweiten Peers 2 gemeldet. Diese Ausgestaltung stellt einen erheblichen Vorteil gegenüber im Stand der Technik bekannten Maßnahme dar, da bei herkömmlicher technischer Verwirklichung ein Ausfall einer Aktor-Sensoreinrichtung, z.B. eines Rauchmelders, im Allgemeinen nur über ein ständiges Abfragen bzw. »Polling« durch eine zentralsteuernde Einheit zu verwirklichen ist. Dieses Polling erhöht jedoch zusätzlich einen nachteiligen hohen Datendurchsatz zur sternförmigen Kommunikation mit Aktor-Sensoreinrichtungen in einem herkömmlichen System. Fällt dagegen ein erfindungsgemäß ausgestalteter Rauchmelder 1 aus, so wird sein Ausfall bei den abbonierenden Peers 2 bemerkt und kann eine entsprechende Reaktion wie den Austausch des Rauchmelders nach sich ziehen. Zusammenfassend sind als besondere Vorteile der erfindungsgemäßen Mittel zu nennen:
- Abbildung verschiedenster Aktor-Sensoreinrichtungen auf eine allgemeine Ressourcenklasse in Peer-to-Peer-Netzwerken.
- Bereitstellung von Ressourcen für alle Aktor-Sensoreinrichtungen 1,2,3 im paketorientierten Netzwerk P2P.
- Dezentrales Abonnement angebotener Informationen und Leistungen an beliebigen, im Peer-to-Peer-Netzwerk registrierten Endgeräten.
- Informatierung aller oder ausgewählter Peers über Ereignisse, die von jeweiligen Aktor-Sensoreinrichtungen gemeldet werden.
- Reaktion auf Signalempfängerbefehle, die von registrierten Peers empfangen werden.
- Erweiterte Funktionalität der Aktor-Sensoreinrichtungen durch Realisierung von in Peer-to-Peer-Netzwerken gebräuchlichen Funktionalitäten, wie z.B. die erwähnte Ausfallnotifikation.

Im Folgenden wird ein Ausführungsbeispiel anhand einer konkreten Ausgestaltung zweier Aktor-Sensoreinrichtungen 1,2 erläutert. Eine erste Aktor-Sensoreinrichtung 1 ist dabei als Türsprechstelle mit integriertem Türöffner verwirklicht. Eine derartige Türsprechstelle stellt den Dienst »Signalisierung« zur Verfügung, welche z.B. die binären Ereignisse »Schellen einer Klingel«, »Aufbau einer Sprachverbindung«, »Aktivierung eines Türöffnungsmechanismus«, »Betriebsstörung der Aktor-Sensoreinrichtung« zur Verfügung stellt. Die Türsprechstelle 1 informiert weiterhin alle weiteren Aktor-Sensoreinrichtungen 2,3 sowie den Server SRV, welche diesen Dienst abboniert haben, über das Ereignis »Klingelknopf gedrückt«.

Der Server SRV oder die übrigen Aktor-Sensoreinrichtungen 2,3 können den Befehl »Türöffnungsrelais aktivieren« an einem entsprechenden Aktor der ersten Aktor-Sensoreinrichtung 1 auslösen, beispielsweise bei Betätigung einer Funktionstaste an einem ebenfalls als Peer agierenden - nicht dargestellten - Kommunikationsendgerät. Weiterhin kann eine Aktivierung des Aktors Türöffnungsrelais lediglich registrierten Aktor-Sensoreinrichtungen 2,3 gestattet sein.

## Patentansprüche

1. Dezentrales Peer-to-Peer-Netzwerk, in das eine Aktor-Sensoreinrichtung mit mindestens einem, über das Netzwerk abrufbaren und/oder änderbaren Betriebszustand, eingebunden ist, wobei das Netzwerk als paketorientiertes Netzwerk aufgebaut ist, dem ein logisches Netz überlagert ist, das ein Ressourcenverwaltungssystem zur Verwirklichung einer Peer-to-Peer-Architektur realisiert,
**dadurch gekennzeichnet, dass**
die Aktor-Sensoreinrichtung als Peer an das Ressourcenverwaltungssystern derart angebunden ist, dass sie ihre Eigenschaften in Form einer Identifikation und Fähigkeiten in Form von verfügbaren Steuerungsmöglichkeiten und Betriebszuständen über das Ressourcenverwaltungssystem anderen Peers, beispielsweise weiteren Aktor-Sensoreinrichtungen, steuernden Rechnersystemen oder Kommunikationsendgeräten, bekannt macht, die anhand dieser Eigenschaften und Fähigkeiten in der Lage sind, auf die Aktor-Sensoreinrichtung zuzugreifen und den Betriebszustand abzurufen und zu ändern.

2. Netzwerk nach Anspruch 1, **dadurch gekennzeichnet, dass** die Aktor-Sensoreinrichtung an das Ressourcenverwaltungssystem derart angebunden ist, dass die Bekanntmachung der Eigenschaften und Fähigkeiten der Aktor-Sensoreinrichtung über allgemein definierte Ressourcenklassen erfolgt.

3. Netzwerk nach Anspruch 1 oder 2, **dadurch gekennzeichnet, dass**
zu den Eigenschaften der Aktor-Sensoreinrichtung Berechtigungen gehören, die definierten anderen Peers einen Zugriff erlauben.

4. Netzwerk nach Anspruch 3, **dadurch gekennzeichnet, dass** zu den Berechtigungen Identifikationsnummern gehören, an die eine Registrierung der Aktor-Sensoreinrichtung gebunden ist.

5. Netzwerk nach einem der vorhergehenden Ansprüche,
**dadurch gekennzeichnet, dass**
die Aktor-Sensoreinrichtung an das Ressourcenverwaltungssystem derart angebunden ist, dass Ereignisse bei bestimmten Aktor-Sensoreinrichtungen in dem Netzwerk bekannt gegeben werden und von registrierten Peers ausgewertet werden.

6. Netzwerk nach einem der vorhergehenden Ansprüche,
**dadurch gekennzeichnet, dass**
die Aktor-Sensoreinrichtung an das Ressourcenverwaltungssystem derart angebunden ist, dass ein Ausfall der Aktor-Sensoreinrichtung im Netzwerk durch einen seine Betriebszustände nutzenden anderen Peer erkannt wird und eine Warnung gemeldet wird.

## Claims

1. Decentralised peer-to-peer network, into which an actuator-sensor device is incorporated, with at least one operational status which can be called up and/or altered via the network, wherein the network is set up as a packet-oriented network, on which a logic network is overlaid, which creates a resource management system for the realisation of a peer-to-peer architecture, **characterised in that** the actuator-sensor device is integrated as a peer into the resource management system in such a way that it makes its characteristics known in the form of an identification and its capabilities in the form of available control possibilities and operational states via the resource management systems of other peers, for example other actuator-sensor devices, controlling computer systems, or communications terminals, which are in a position, on the basis of these characteristics and capabilities, to engage onto the actuator-sensor device, and to call up and change the operational state.

2. Network according to claim 1, **characterised in that** the actuator-sensor device is connected to the resource management system in such a way that the notification of the characteristics and capabilities of the actuator-sensor device is effected via generally defined resource classes.

3. Network according to claim 1 or 2, **characterised in that** entitlements belong to the characteristics of the actuator-sensor device which allow for access to other defined peers.

4. Network according to claim 3, **characterised in that** identification numbers belong to the entitlements to which a registration of the actuator-sensor device is bound.

5. Network according to any one of the preceding claims, **characterised in that** the actuator-sensor device is connected to the resource management system n such a way that events with regard to specific actuator-sensor devices are notified in the network, and are evaluated by registered peers.

6. Network according to any one of the preceding claims, **characterised in that** the actuator-sensor device is connected to the resource management system in such a way that a failure of the actuator-sensor device in the network is recognized by another peer using its operational states, and a warning is issued.

## Revendications

1. Réseau poste à poste décentralisé, dans lequel est intégré un actionneur-capteur ayant au moins un état de fonctionnement modifiable et/ou appelable par le biais du réseau, le réseau étant agencé en tant que réseau orienté paquets auquel est superposé un réseau logique qui réalise un système de gestion de ressources servant à établir une architecture poste à poste,
**caractérisé en ce que**
l'actionneur-capteur est rattaché en tant que poste au système de gestion de ressources d'une manière telle qu'il révèle ses propriétés sous forme d'une identification et ses capacités sous forme de possibilités de commande et d'états de fonctionnement disponibles, par le biais du système de gestion de ressources, à d'autres postes, par exemple à d'autres actionneurs-capteurs, à des systèmes informatiques maîtres ou à des appareils de communication, qui sont en mesure à l'aide de ces propriétés et capacités d'accéder à l'actionneur-capteur et d'appeler et modifier l'état de fonctionnement.

2. Réseau selon la revendication 1, **caractérisé en ce que** l'actionneur-capteur est rattaché au système de gestion de ressources d'une manière telle que la révélation des propriétés et des capacités de l'actionneur-capteur est effectuée par le biais de classes de ressources définies d'une manière générale.

3. Réseau selon la revendication 1 ou 2, **caractérisé en ce que**
des autorisations, qui permettent un accès à d'autres postes définis, font partie des propriétés de l'actionneur-capteur.

4. Réseau selon la revendication 3, **caractérisé en ce que** des numéros d'identification, auxquels est relié un enregistrement de l'actionneur-capteur, font partie des autorisations.

5. Réseau selon l'une quelconque des revendications précédentes, **caractérisé en ce que** l'actionneur-capteur est rattaché au système de gestion de ressources d'une manière telle que des événements soient révélés pour certains actionneurs-capteurs dans le réseau et soient évalués par des postes enregistrés.

6. Réseau selon l'une quelconque des revendications précédentes, **caractérisé en ce que**
l'actionneur-capteur est rattaché au système de gestion de ressources d'une manière telle qu'une panne de l'actionneur-capteur soit détectée dans le réseau par un autre poste utilisant ses états de fonctionnement et qu'un avertissement soit signalé.
